# EUROPEAN PATENT APPLICATION

(11) **EP 2 383 989 A1**
(43) Date of publication of application: **02.11.2011**
(21) Application number: 11163991.0
(22) Date of filing: 28.04.2011
(51) Int. Cl.: H04N 5/64

(54) **Receiving device**

(30) Priority: 28.04.2010 JP 2010104265
(71) Applicant: Mitsumi Electric Co., Ltd., Tama-shi, Tokyo 206-8567 (JP)
(72) Inventor: Arata, Torao, Tokyo 206-8567 (JP)
(74) Representative: Maiwald Patentanwalts GmbH

(57) **Abstract**

A receiving device includes a case body having an insertion slot of a contact IC card formed in the case body, a tuner arranged in the case body to receive a digital broadcasting signal, and a digital circuit board arranged in the case body to accommodate the tuner mounted on the digital circuit board. In the receiving device, the digital circuit board is arranged to include a debugging circuit pattern formed in a predetermined area at an end portion of the digital circuit board, the debugging circuit pattern being arranged to connect an integrated circuit mounted on the digital circuit board to a debugging circuit for debugging of the integrated circuit.

## Description

### CROSS-REFERENCE TO RELATED APPLICATION

The present application is based upon and claims the benefit of priority of Japanese patent application No. 2010-104265, filed on April 28, 2010, the entire contents of which are incorporated by reference in their entirety.

### BACKGROUND OF THE INVENTION

### 1. Field of the Invention

The present disclosure relates to a receiving device in which a digital circuit board on which a tuner to receive a digital broadcasting signal is mounted is accommodated in a case body having an insertion slot of a contact IC card formed therein.

### 2. Description of the Related Art

In recent years, a broadcasting format of television broadcasting is shifting from an analog signal format to a digital signal format. With shifting of the broadcasting format, the product of a receiving device which receives a digital broadcasting signal, such as in terrestrial TV broadcasting, and converts the digital broadcasting signal into a signal that allows viewing and listening of a broadcasting program on a common television has been commercially available.

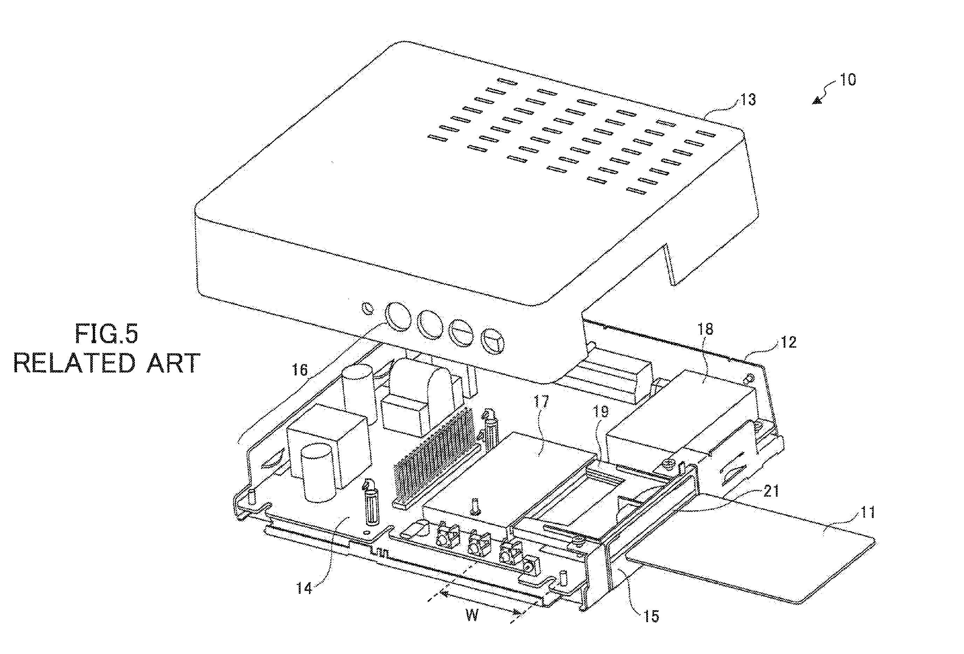

FIG. 5 is a diagram illustrating the composition of a receiving device according to the related art. In this receiving device 10 according to the related art, upon insertion of a contact IC (integrated circuit) card 11 to receive a digital broadcasting signal, the receiving device 10 operates as a receiving device which receives the digital broadcasting signal.

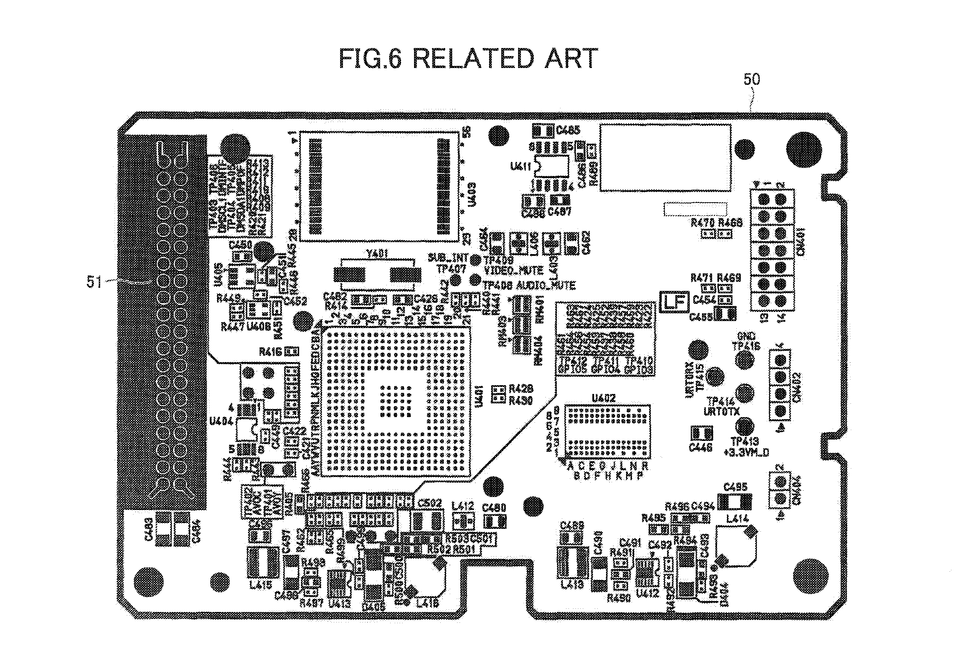

As illustrated in FIG. 5, the receiving device 10 according to the related art includes a body part 12 and a lid part 13, and the body part 12 is arranged to accommodate an analog circuit board 14 and a digital circuit board 50 as illustrated in FIG. 6 therein. A card insertion portion 15 is formed in the body part 12. In the analog circuit board 14, a power supply circuit 16, a connector 17 in which the contact IC card 11 is inserted, a tuner 18, and a guide member 19 which guides the contact IC card 11 to the connector 17 are mounted. The guide member 19 is designed so that the guide member 19 has a length W for accommodating the whole contact IC card 11 in the body part 12 when the contact IC card 11 is inserted in the connector 17. The guide member 19 is mounted on the analog circuit board 14 such that a card insertion slit 21 is formed in the card insertion portion 15.

The digital circuit board 50 is mounted on the body part 12 of the receiving device 10, and a CPU (central processing unit) which performs various processes in the receiving device 10 is mounted on the digital circuit board 50. FIG. 6 is a diagram illustrating the composition of the digital circuit board 50 according to the related art.

As illustrated in FIG. 6, in the digital circuit board 50, a pattern 51 is formed for connecting to the digital circuit board 50 a debugging connector (not illustrated) via the pattern 51, and the debugging connector is provided for debugging operation of the CPU on the digital circuit board 50 in a development phase of the receiving device 10.

In the development stage of the receiving device 10 according to the related art, a development-phase digital circuit board is produced and debugging of an IC or LSI mounted on the development-phase digital circuit board is performed using the development-phase digital circuit board. A debugging connector which is prepared beforehand in accordance with the specifications of the IC or LSI being tested, such as a CPU, is provided in the development-phase digital circuit board. The debugging connector and the IC (or LSI) are connected together and the debugging of the IC (or LSI) is performed.

After the debugging of the IC or LSI in the development-phase digital circuit board is performed, the debugging connector is removed, and a final-product-version digital circuit board for mass production will be produced. The digital circuit board 50 as illustrated in FIG. 6 is an example of the final-product-version digital circuit board for mass production.

For example, Japanese Laid-Open Patent Publication No. 2007-147352 discloses a wireless interface module which is mounted on a target LSI to perform an internal process, such as debugging of the target LSI, remotely from a debugging PC.

In the case of the above-described digital circuit board 50 according to the related art, the final-product-version digital circuit board for mass production will be produced in the state in which the debugging connector is removed from the digital circuit board, and the pattern 51 for connecting the debugging connector to the digital circuit board 50 will remain in the final-product-version digital circuit board. This pattern 51 will be the unnecessary pattern for the final-product-version digital circuit board 50, and the area in which the pattern 51 is formed will be the unnecessary area in the final-product-version digital circuit board 50.

### SUMMARY OF THE INVENTION

In one aspect, the present disclosure provides a receiving device which is miniaturized by optimizing arrangement of the areas of a digital circuit board that are used for debugging in a development phase but are unnecessary for mass production.

In an embodiment which solves or reduces one or more of the above-mentioned problems, the present disclosure provides a receiving device including: a case body having an insertion slot of a contact IC card formed in the case body; a tuner arranged in the case body to receive a digital broadcasting signal; and a digital circuit board arranged in the case body to accommodate the tuner mounted on the digital circuit board, wherein the digital circuit board is arranged to include a debugging circuit pattern formed in a predetermined area at an end portion of the digital circuit board, the debugging circuit pattern being arranged to connect an integrated circuit mounted on the digital circuit board to a debugging circuit for debugging of the integrated circuit.

Other objects, features and advantages of the present disclosure will be apparent from the following detailed description when read in conjunction with the accompanying drawings.

### BRIEF DESCRIPTION OF THE DRAWINGS

FIG. 1 is an exploded perspective view of a receiving device according to an embodiment of the present disclosure.
FIG. 2 is an exploded perspective view of the receiving device of this embodiment.
FIG. 3 is a cross-sectional view of the receiving device of this embodiment taken along the line A-A indicated in FIG. 1.
FIG. 4 is a diagram illustrating the composition of a digital circuit board in the receiving device of this embodiment.
FIG. 5 is a diagram illustrating the composition of a receiving device according to the related art.
FIG. 6 is a diagram illustrating the composition of a digital circuit board according to the related art.

### DETAILED DESCRIPTION OF PREFERRED EMBODIMENTS

A description will now be given of embodiments of the present disclosure with reference to the accompanying drawings .

In a receiving device according to an embodiment of the present disclosure, a pattern for connecting a debugging connector to a digital circuit board is reduced in size, the pattern is arranged at an end portion of the digital circuit board, and the unnecessary area in the digital circuit board as in the digital circuit board according to the related art is eliminated, thereby contributing to the miniaturization of the digital circuit board and the receiving device.

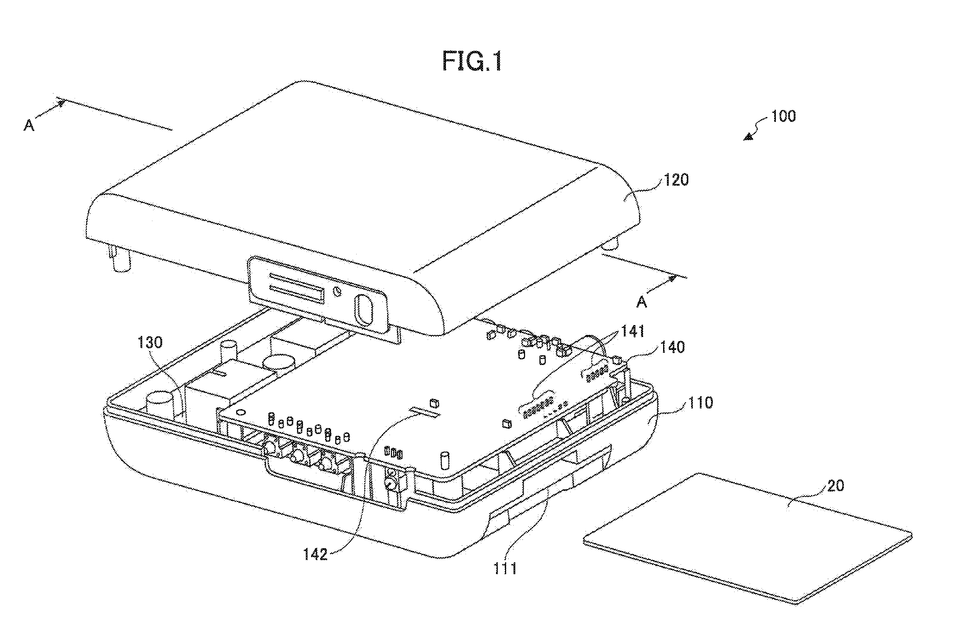

The receiving device of this embodiment will be described with reference to FIG. 1. FIG. 1 is an exploded perspective view of a receiving device 100 of this embodiment.

For example, the receiving device 100 of this embodiment is a receiving device, such as a set-top box, for receiving a digital broadcasting signal.

In the receiving device 100 of this embodiment, upon insertion of a contact IC (integrated circuit) card, such as a B-CAS (BS Conditional Access Systems) card 20, the receiving device 100 operates as a receiving device which receives a digital broadcasting signal. An IC chip (which is not illustrated) is mounted on the B-CAS card 20, and a subscriber identification number and a cryptographic key that are uniquely defined per the IC card are stored in the IC chip.

As illustrated in FIG. 1, the receiving device 100 of this embodiment includes a case body 110 and a lid part 120, and the case body 110 is arranged to accommodate a power supply circuit board 130 and a digital circuit board 140 therein. In the case body 110, an insertion slot 111 for inserting the B-CAS card 20 is formed. The B-CAS card 20 is inserted in the insertion slot 111, and connected to a B-CAS card connector 150 which will be described later.

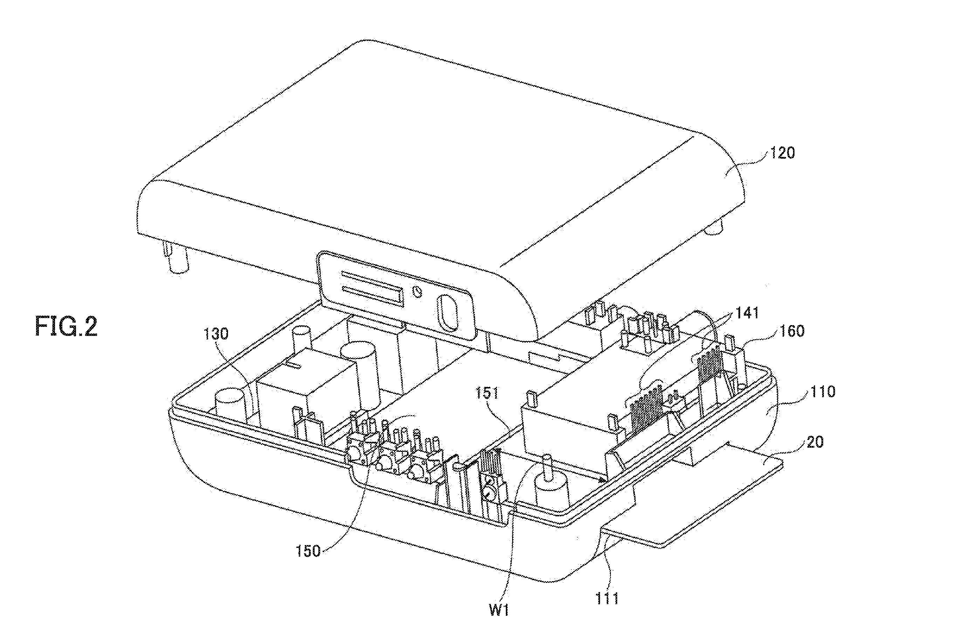

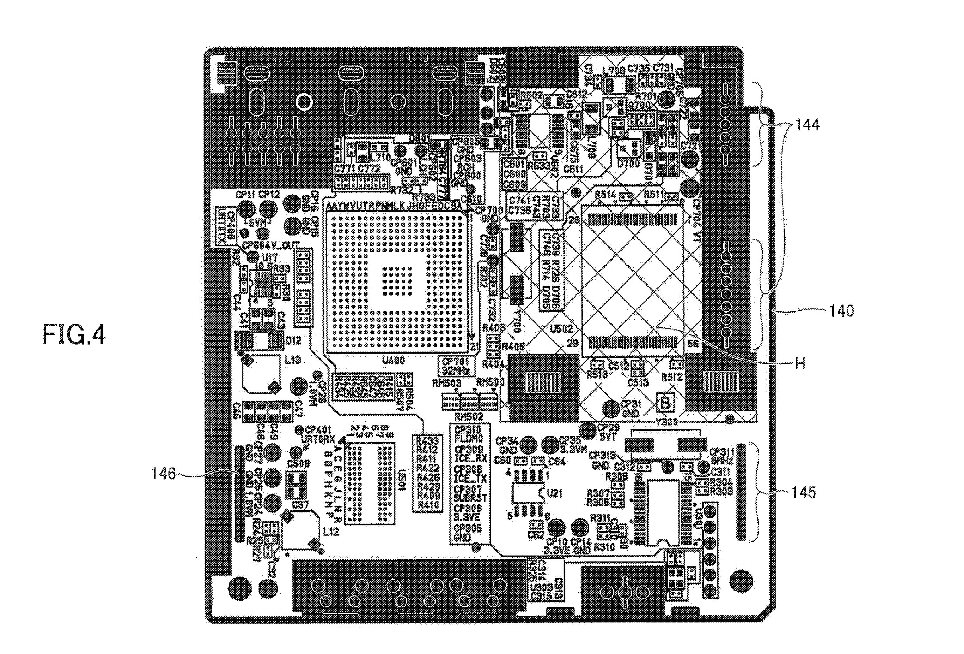

The power supply circuit board 130 of this embodiment mainly includes a power supply circuit which is composed of analog circuits, and a B-CAS card connector 150, which are mounted on the power supply circuit board 130. The digital circuit board 140 of this embodiment is a double-sided mounting board. As illustrated in FIG. 4 which will be mentioned later, various kinds of digital circuits, such as a CPU (central processing unit) and a memory chip, are mounted on the surface on the side of the lid part 120. A tuner 160 to receive a digital broadcasting signal is mounted on the surface of the digital circuit board 140 which is opposite to the surface on the side of the lid part 120. Pins 141 as illustrated in FIG. 1 are respective pins of the tuner 160 (refer to FIG. 2).

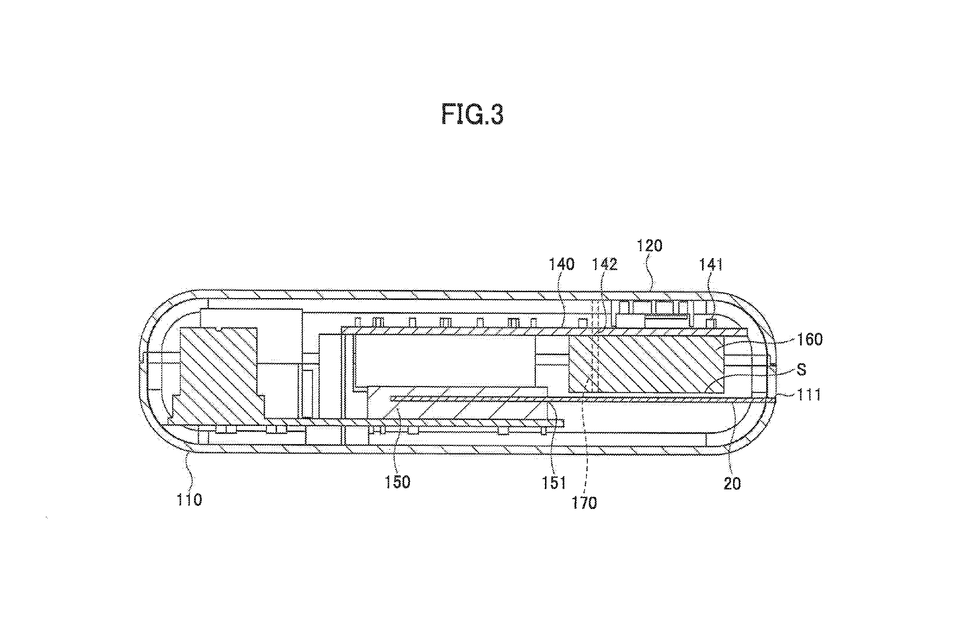

In the receiving device 100 of this embodiment, a guide member 170 (refer to FIG. 3) is formed in the lid part 120. The guide member 170 is a plate-like member which is integrally formed with the lid part 120. The guide member 170 guides the B-CAS card 20 to a card insertion opening 151 of the B-CAS card connector 150. A through hole 142 is formed in the digital circuit board 140, and the guide member 170 passes through the through hole 142 when the case body 110 and the lid part 120 are coupled together. In the receiving device 100 of this embodiment, when the case body 110 and the lid part 120 are coupled together, the guide member 170 passes through the through hole 142, and the B-CAS card 20 which is inserted from the insertion slot 111 is guided to the card insertion opening 151 in front of the B-CAS card connector 150 by bringing the bottom end of the guide member 170 in contact with the inserted B-CAS card 20 in the position in front of the B-CAS card connector 150.

With reference to FIG. 2 and FIG. 3, the composition of the receiving device 100 of this embodiment will be described further. FIG. 2 is an exploded perspective view of the receiving device of this embodiment. FIG. 3 is a cross-sectional view of the receiving device of this embodiment taken along the line A-A indicated in FIG. 1.

Specifically, the digital circuit board 140, as illustrated in FIG. 1, is eliminated in the receiving device 100 illustrated in FIG. 2. In the receiving device 100 illustrated in FIG. 3, the B-CAS card 20, as illustrated in FIG. 1, is inserted in the receiving device 100.

As illustrated in FIG. 2, in the receiving device 100 of this embodiment, the tuner 160 is disposed between the insertion slot 111 of the case body 110 and the card insertion opening 151 of the B-CAS card connector 150. The digital circuit board 140 is arranged over the power supply circuit board 130 in an overlapped manner so that the tuner 160 on the bottom of the digital circuit board 140 and the B-CAS card connector 150 on the top of the power supply circuit board 130 are arranged side by side in the position adjacent to each other. By the arrangement of the digital circuit board 140 over the power supply circuit board 130, the tuner 160 is disposed in the space between the insertion slot 111 of the case body 110 and the card insertion opening 151 of the B-CAS card connector 150.

In this embodiment, a length W1 (as indicated in FIG. 2) in the longitudinal direction from the insertion slot 111 of the case body 110 to the card insertion opening 151 of the B-CAS card connector 150 is designed so that the whole B-CAS card 20 can be accommodated in the case body 110 when the B-CAS card 20 is inserted into the B-CAS card connector 150.

In the receiving device 100 of this embodiment, the tuner 160 is disposed in the space between the insertion slot 111 of the case body 110 and the card insertion opening 151 of the B-CAS card connector 150, which space has not been used in the receiving device according to the related art, and the receiving device 100 of this embodiment can be reduced in size.

In the receiving device 100 of this embodiment, as illustrated in FIG. 3, the tuner 160 is arranged so that the B-CAS card 20, when the B-CAS card 20 is inserted into the B-CAS card connector 150, may not come in contact with the tuner 160. Specifically, the tuner 160 in this embodiment is arranged so that a bottom surface S of the tuner 160 (as indicated in FIG. 3) does not overlap with the insertion slot 111 and the card insertion opening 151 and does not interfere with the path of the B-CAS card 20 in the insertion direction when the B-CAS card 20 is inserted from the insertion slot 111 into the card insertion opening 151. By the arrangement of the tuner 160 in this embodiment, the B-CAS card 20, when inserted, does not interfere with the tuner 160 and can be inserted into the B-CAS card connector 150.

Furthermore, the tuner 160 in this embodiment functions as an auxiliary guide member which assists the guide member 170. Namely, in this embodiment, the B-CAS card 20, when inserted, is guided along the bottom surface S of the tuner 160 to the position of the guide member 170. Then, the B-CAS card 20 is guided by the guide member 170 and inserted into the B-CAS card connector 150.

As described above, in this embodiment, the tuner 160 is arranged so that the bottom surface S of the tuner 160 does not interfere with the path of the B-CAS card 20 when the B-CAS card 20 is inserted from the insertion slot 111 into the card insertion opening 151. By this composition, the tuner 160 can function as an auxiliary guide member which extends from the insertion slot 111 to the guide member 170.

Therefore, the guide member 170 in this embodiment may be formed as a plate-like member embedded in the back of the lid part 120, and it is possible to reduce the guide member 170 in size and simplify the structure of the guide member 170 when compared with that of the guide member in the receiving device according to the related art.

Alternatively, the guide member 170 in this embodiment may be omitted by using the tuner 160 as a guide member instead of the guide member 170. In this case, the bottom surface S of the tuner 160 may be covered with a resin film or the like. By covering the bottom surface S of the tuner 160 with a resin film, it is possible to protect the surface of the B-CAS card 20 from being damaged by the bottom surface S of the tuner 160 when the B-CAS card 20 is inserted.

Next, the digital circuit board 140 in this embodiment will be described. In this embodiment, the tuner 160 is arranged in the digital circuit board 140 to miniaturize the digital circuit board 140.

FIG. 4 is a diagram illustrating the composition of the digital circuit board in the receiving device of this embodiment. In FIG. 4, an example of the layout of the top surface of the digital circuit board 140 on the side of the lid part 120 is illustrated.

In this embodiment, the tuner 160 is mounted on the bottom surface of the digital circuit board 140 which is opposite to the front surface of the digital circuit board 140 as illustrated in FIG. 4. In this embodiment, the tuner 160 and the digital circuit board 140 are arranged so that the area of the tuner 160 from which a number of pins 141 project is located at an end portion of the digital circuit board 140.

Through holes 144 are formed at the end portion of the digital circuit board 140 so that the pins of the tuner 160 penetrate the through holes 144. The pins 141 are fitted into the through holes 144, and the tuner 160 is mounted on the bottom surface of the digital circuit board 140.

As described above, in this embodiment, the tuner 160 and the digital circuit board 140 are arranged such that the area of the tuner 160 from which the pins 141 project is located at the end portion of the digital circuit board 140, and it is possible to avoid forming through holes in the digital circuit board 140 near the central part of the digital circuit board 140. Therefore, in the digital circuit board 140 of this embodiment, an IC or LSI that is connected to a number of signal lines can be mounted in the area H on the top surface of the digital circuit board 140 where the tuner 160 is mounted on the bottom surface thereof. Hence, the circuit density of the digital circuit board 140 can be increased.

In this embodiment, the tuner 160 is mounted on the digital circuit board 140, and video signal lines in the vicinity of the tuner 160 are also wired in the digital circuit board 140. It is possible to reduce inclusion of noise in a video signal by arranging the video signal lines in the digital circuit board 140. It is possible to reduce the number of signal lines which interconnect the power supply circuit board 130 and the digital circuit board 140. A connector with a small number of pins can be used to connect the power supply circuit board 130 and the digital circuit board 140.

The digital circuit board 140 in this embodiment is arranged so that debugging circuit ports are located at end portions of the digital circuit board 140. By this composition in this embodiment, the digital circuit board 140 can be miniaturized.

The digital circuit board 140 of this embodiment includes debugging circuit ports 145 and 146 for connecting the debugging circuits to the digital circuit board 140. The debugging circuit ports 145 and 146 are formed in the part inhibition areas at the end portions of the digital circuit board 140. The part inhibition areas are areas of the digital circuit board 140 used to support the digital circuit board 140 in the manufacturing processes of the digital circuit board 140. Implementation of parts in the part inhibition areas of the digital circuit board 140 is inhibited. In this embodiment, the number of the debugging circuit ports 145 and 146 formed in the digital circuit board 140 is the same as the number of signal lines needed to perform debugging of the IC or LSI mounted on the digital circuit board 140. Hence, the number of the debugging circuit ports 145 and 146 can be smaller than the number of pins of the debugging connector for use in the digital circuit board according to the related art. A

When debugging of the digital circuit board 140 in this embodiment is performed, the debugging circuits which are prepared beforehand are inserted in the debugging circuit ports 145 and 146. By this composition, debugging of each of individual digital circuit boards 140 can be performed even after the mass production is started. Therefore, when a problem is detected among the products, verification can be performed to check if the problem occurs for each of the products.

As described in the foregoing, according to the present disclosure, it is possible to provide a receiving device which is miniaturized by optimising arrangement of the areas of a digital circuit board that are used for debugging in a development phase but are unnecessary for mass production.

## Claims

1. A receiving device comprising:
a case body (110) having an insertion slot (111) of a contact IC card (20) formed in the case body;
a tuner (160) arranged in the case body to receive a digital broadcasting signal; and
a digital circuit board (140) arranged in the case body to accommodate the tuner mounted on the digital circuit board,
wherein the digital circuit board (140) is arranged to include a debugging circuit pattern (145, 146) formed in a predetermined area at an end portion of the digital circuit board (140), the debugging circuit pattern (145, 146) being arranged to connect an integrated circuit mounted on the digital circuit board (140) to a debugging circuit for debugging of the integrated circuit.

2. The receiving device according to claim 1, wherein the predetermined area in which the debugging circuit pattern (145, 146) is formed is a part inhibition area of the digital circuit board (140) which is used to support the digital circuit board (140) in manufacturing processes of the digital circuit board, and implementation of parts in the part inhibition area is inhibited.

3. The receiving device according to claim 1, further comprising:
a power supply circuit board (130) arranged in the case body (110); and
a contact IG card connector (150) mounted on the power supply circuit board (130), wherein the contact IC card (20) is inserted in the contact IC card connector (150),
wherein the contact IC card connected (150) is mounted on the power supply circuit board (130) so that, when the contact IC card (20) is inserted from the insertion slot (111) of the case body (110), the whole contact IC card. (20) is fully accommodated in the case body (110), and
the tuner (160) is arranged in the digital circuit board (140) in a position between the insertion slot (111) and the control IC card connector (150) where the contact IC card (20), when inserted, does not contact the tuner (160),
